# EUROPEAN PATENT APPLICATION

(11) **EP 3 182 350 A1**
(43) Date of publication of application: **21.06.2017**
(21) Application number: 16203282.5
(22) Date of filing: 09.12.2016
(51) Int. Cl.: G06Q 10/08

(54) **SYSTEM FOR MANAGING THE PICK-UP AND DELIVERY OF AT LEAST ONE OBJECT, PREFERABLY OF A KEY OF A VEHICLE AND METHOD FOR RENTING VEHICLES BY MEANS OF SAID SYSTEM**

(30) Priority: 16.12.2015 IT UB20159435
(71) Applicant: PHONETICA LAB S.R.L., 20037 Paderno Dugnano (MI) (IT)
(72) Inventor: DURANTE, Giuseppe, 20020 Arese (MI) (IT); DURANTE, Marco, 20020 Arese (MI) (IT); TREVISI, Raoul, 20020 Arconate (MI) (IT)
(74) Representative: Brasca, Marco

(57) **Abstract**

The present invention relates to a system (1) for managing the pick-up and delivery of at least one handy object, for example a key (2) of a vehicle, comprising: a storage (4) provided with a plurality of cells (5) and a panel (6) frontally positioned with respect to the storage (4) and provided with a door (15) of access to at least one cell (5) of the storage (4). The storage (4) can be moved with respect to the panel (6) in order to provide a first cell of the storage (4) at said access door (15). The system (1) also comprises means (16, 17) for recognizing the key (2) and/or reading information on said key (2) or on a key holder (11). The recognition means (16, 17) operate within said first cell and are arranged in proximity to the access door (15). The system (1) also comprises a device (18) for authenticating a user and a control unit (19) connected to the storage (4), to the door (15), to the recognition means (16, 17) and to the authentication device (18). The control unit (19) is configured for allowing the authentication of a user and, in case of positive outcome of the authentication, allowing the access to said first cell (5) in order to pick up or deliver a key (2) of a vehicle.

## Description

The object of the present invention is a system for managing the pick-up and delivery of at least one handy object, preferably of a key, preferably of a vehicle, and a method for renting vehicles by means of said system.

The system and the method can be implemented for renting vehicles in general, such as motor vehicles, motorcycles, boats, aircraft. In particular, the system and the method are implemented for renting motor vehicles, such as: cars, vans, buses, trucks etc.

### State of the art

Boxes are known for providing the key of a specific vehicle to a user. Such boxes are used in the scope of vehicle rental services.

In rental services, it is important that each user who makes use of the rental service is given a specific key, which allows the user himself/herself to use a specific vehicle. Therefore, it is essential that there be a system or an operator which provides the user with the correct key and which is able to subsequently control that the key is correctly returned.

The box is a locker which has a certain number of cells closed by respective doors, each of which openable by means of a PIN code. Alternatively, the authorization for opening a single door can be given remotely by an operator. In other words, the operator, by means of the opening of the cell, authorizes a user for the pick-up or delivery of a specific key.

The known box does not require the presence of an operator at the place of installation, but the operator can operate remotely in order to manage the authorizations and the delivery and the pick-up of keys.

Nevertheless, the known box has drawbacks.

The known box is in fact configured for allowing the opening of its doors automatically or remotely by means of the operator, but the closure of the doors is manual, that is entrusted to the user, and hence it does not allow reliable and secure management of both the steps of delivery of the key to the user and of return of the key by the user that are typical of the vehicle rental procedure. In particular, at the time of return of the keys by the user, the box does not have the required security adapted to ensure that the key cannot be picked up by other users.

In addition, the box is unable to recognize if the key returned by a user corresponds with the key picked up or in any case with an expected key. In other words, the user could return another key or an object that is not a key and the box would not immediately be aware of the lack of return of the expected key.

The doors of the cells of the known box are also always entirely visible and accessible from the outside. The locker therefore has multiple weak points of potential access, i.e. all the doors, which do not make it very secure.

In addition, this structure can attract the attention of possible ill-intentioned people, who know with a glance how many keys are potentially present in the locker.

The above considerations at least partly also refer to other types of handy objects, i.e. small-size objects which, as such, can be easily handled by a user, and are intended to be picked up and returned. For example, such objects can be jewels or other accessories.

Public document US4812985 is also known, which illustrates an automatic system for the preservation and distribution of car keys to be used, for example in the context of a car dealership. The system comprises a box-like frame that has an introduction slit and an issue slit for containers intended to contain the keys. Inside the box-like frame, a storage is present of carousel type, as well as a mechanism that allows bringing the containers from the introduction slit to the storage and from the storage to the issue slit. The carousel storage comprises a plurality of stacked plates, spaced and supported by a shaft. The containers with the keys are positioned on said plates at respective sectors. The system also comprises a reader configured for reading the barcodes placed on the containers of the keys. The reader is situated just downstream of the introduction slit and upstream of the carousel storage, so that such reader is unable to read said barcodes when the container is housed in the storage.

### Object of the invention

In light of the above, the main object of the present invention is to solve one or more of the problems encountered in the prior art.

One object of the present invention is to provide a system for managing the pick-up and delivery of handy objects, such as keys, for example of vehicles, which allows securely preserving the contained objects (preferably the contained keys) and securely managing both the step of pick-up and the step of delivery of the objects (preferably keys) by a user.

A further object of the present invention is to provide a method for renting vehicles which allows a delivery and a pick-up of the keys of the vehicles themselves that is simple, quick and secure.

The method and the system in accordance with the invention have the purpose of allowing a precise traceability of the objects (preferably of the keys) and, in particular, of preventing errors from occurring in the management procedure for the objects (preferably keys), preventing the delivery of incorrect objects (preferably keys) to the user or the return of incorrect objects (preferably keys) to the system.

### Summary of the invention

These and still other objects, which will be clearer from the following description, are substantially reached by a system for managing the pick-up and delivery of at least one handy object, preferably of a key, preferably of a vehicle, and by a method for renting vehicles in accordance with that expressed in one or more of the enclosed claims and/or of the following aspects, taken separately or in any one combination with each other or in combination with any one of the enclosed claims and/or in combination with any one of the further aspects or characteristics described hereinbelow.

In a first aspect, a system is provided for managing the pick-up and delivery of at least one handy object, preferably a key, e.g. of a vehicle, comprising:
- a storage provided with a plurality of cells,
- a panel frontally positioned with respect to the storage and provided with a door of access to at least one cell of the storage, wherein the storage can be moved with respect to the panel in order to provide a first cell of the storage at said access door,
- means for recognizing the handy object, preferably the key, and/or for reading information on said handy object, preferably on said key or on a key holder,
- a device for authenticating a user,
- a control unit connected to the storage, to the door, to the recognition means and to the authentication device,
wherein the control unit is configured for:
- allowing the authentication of a user,
- in case of positive outcome of the authentication, allowing the access to said first cell in order to pick up or deliver a handy object, preferably a key, e.g. of a vehicle;
wherein said recognition means are operating inside said first cell and are arranged in proximity to the access door.

The Applicant has observed that, by means of the use of said recognition means, the procedure of delivery of the objects (preferably keys) can also be carried out without an operator at the site where the system is installed.

The Applicant has also detected that the recognition means and the management of the system by means of the control unit allow a ready detection of possible errors in the procedure of delivery of the objects (preferably keys), optimizing the operation of the system.

The Applicant has also verified that the system of the invention allows identifying the object, preferably the key, when it is already in the cell and hence associating - without any possibility of error - said object with its position within the storage. US4812985, however, is only able to read information relative to the keys when the little boxes/containers containing said keys move (at the inlet) below its reader. In addition, the system of the invention allows remotely verifying the contents of the single cells, independent of the operations of delivery and return of the objects. The system is in fact able to read the contents of all the cells with the door closed, due to the fact that the recognition means operate within said cells and not, as occurs for example US4812985, between the storage and a separate zone of keys delivery/pick-up. In this manner, the system can execute a verification of the objects that the storage contains, for example one or more times per day and/or between one delivery/pick-up operation and the next operation.

It is thus possible to remotely verify the contents of the single cells even after a data loss or after a resolved technical failure which affected the object-position association or after a manual positioning operation of the objects. For example, an operator can open the system thus configured in order to quickly place the objects directly in the cells and not slowly, one at a time, using the same interface as the final user, and he/she can do this operation without manually inserting the data of the object-cell associations since the system can autonomously calculate this. Unlike the system of the invention, a man skilled in the art after having studied US4812985 would consider that after a data loss or a resolved technical failure that affected the object-position association, the only way to recalculate the contents of the cells would be that of sending an operator to the site to empty the system and reload one object at a time, using the same interface as the final user. In addition, unlike the proposed system, a man skilled in the art after having studied US4812985 would consider that an operator who opened the system in order to place the objects would have had to manually insert the data of the object-position associations, an operation that could involve errors, and he/she would consider that, if there were errors, the only way to recalculate the contents of the cells would be that of sending an operator to the site to empty the system and reload one object at a time, using the same interface as the final user.

The Applicant has also verified that the structure of the storage according to the invention allows ensuring a considerably improved security in a manner so as to prevent and/or minimize the break-in attempts of the same storage.

In one aspect, the storage is configured for rotating around a main axis and with respect to the panel.

In one aspect, the door can be moved, in particular automatically, between a closed position in which it prevents the access to said cell and an open position in which it allows the access to the cell, in said open position the door being at least partially arranged within a space of the box-like body.

In one aspect, the door can be moved, in particular automatically, also between the open position and the closed position.

In one aspect, the door can be moved via translation or sliding between said positions.

In one aspect, the control unit is configured for automatically opening and/or closing the door.

In one aspect, the storage is configured for rotating on a substantially horizontal plane.

In one aspect, the storage comprises one or more rotating elements around a main axis and coaxial with each other.

In one aspect, each rotating element is configured for rotating integrally or independently with respect to the other rotating elements.

In one aspect, each rotating element comprises a plurality of cells, for example 20 cells.

In one aspect, the rotating elements are stacked on each other and are arranged at different heights.

In one aspect, the system comprises motor means configured for allowing the rotation of the rotating elements of the storage.

In one aspect, the panel is configured for allowing the access only to one cell or to a limited number of cells, for example to one cell for each rotating element, by means of a respective door for each cell of said limited number of cells.

In one aspect, the panel is configured for allowing the access to one cell for each rotating element.

In one aspect, each rotating element comprises a plurality of walls radially arranged with respect to the main axis, said walls laterally delimiting respective cells, each rotating element also comprising a bottom portion and an upper portion opposite said bottom portion, the bottom portion and the upper portion respectively delimiting cells at the lower and upper parts.

In one aspect, the cells are radially open towards the exterior of the rotating element.

In one aspect, the storage is of anti-intrusion type, in particular the storage has a reinforcing armor.

In one aspect, the system comprises a box-like body configured for being abutted against the ground or against a counter, the box-like body comprising said panel, the storage being arranged inside the box-like body.

In one aspect, the box-like body is configured for being arranged in fixed position with respect to the ground, for example by means of a counter anchored to the ground.

In one aspect, the box-like body substantially has the size of an automatic dispenser.

In one aspect, the box-like body has a depth comprised between 50 and 70 cm, in particular substantially equal to 62 cm.

In one aspect, the box-like body has a length comprised between 50 and 70 cm, in particular substantially equal to 62 cm.

In one aspect, the box-like body has a height comprised between 40 and 50 cm, in particular substantially equal to 45 cm.

In one aspect, the box-like body has the shape of a parallelepiped with square base.

In one aspect, the cell is shaped and sized for allowing the manual pick-up and delivery of the handy object, preferably of the key, by a user.

In one aspect, the system comprises a coupling system for a correct positioning of the handy object, preferably the key holder and/or the key, with respect to said recognition means and wherein the coupling system is configured for allowing a single position of said handy object, preferably the key holder and/or the key, within said first cell.

In one aspect, the system comprises at least one handy object, preferably of a key of a vehicle and optionally a key holder engaged with said key, the handy object, preferably the key or the key holder, being provided with said coupling system.

In one aspect, the coupling system is configured for allowing a single position of the handy object, preferably the key holder and/or the key, within said first cell.

In one aspect, the system comprises a constraining element arranged between the key holder and the key and configured for maintaining a specific mutual position between the key holder and the key.

In one aspect, the constraining element is of fixed type and is configured for maintaining a single fixed mutual position between the key holder and the key.

In one aspect, the constraining element is configured for allowing a plurality of mutual positions between the key holder and the key.

In one aspect, the constraining element can be manually locked and unlocked in order to allow positioning the key and the key holder in a specific mutual position. In one aspect, the key holder and the key can define, in said mutual position, an angle comprised between 0 degrees and 90 degrees.

In one aspect, said angle is defined as the smallest angle formed between respective main extension directions of the key holder and of the key.

In one aspect, the coupling system is of the type having a male connector adapted to be inserted in a respective female seat.

In one aspect, the female seat is obtained on a bottom portion of the cell.

In one aspect, the male connector and the female seat are counter-shaped.

In one aspect, the recognition means dialog with the handy object, preferably with the key, in order to identify the specific object, preferably the specific key, arranged in said first cell.

In one aspect, the means for recognizing the object, preferably the key, are configured for recognizing the shape of the object, preferably of the key, delivered in said first cell.

In one aspect, the recognition means comprise at least one reader.

In one aspect, the reader is at least one from among: a RFID reader, a barcode reader, a QR code reader device, a camera or an optical character recognition device (OCR).

In one aspect, the reader is fixed with respect to the storage and with respect to the box-like body.

In one aspect, the reader is arranged in proximity to an opening closed by the door, in a manner such to be operating inside the cell which is brought, by means of the movement of the storage, to the opening.

In one aspect, the reader is arranged below a bottom portion of the cell or it is embedded in the material of the bottom portion.

In one aspect, the recognition means comprise means for identifying the object, preferably the key.

In one aspect, the identification means comprise at least one from among: a RFID tag, a barcode, a QR code, an alphanumeric code, for example associated with a license plate of a vehicle.

In one aspect, the identification means are engaged with the key and/or with a key holder.

In one aspect, the identification means carry information relative to the specific key or to the specific vehicle.

In one aspect, the reader and the identification means are positioned at a fixed distance from each other.

In one aspect, the bottom portion is made of a material configured for allowing the communication between the reader and the identification means, for example it is made of plastic material or non-metallic material.

In one aspect, the system comprises a control unit configured for:
- recognizing, in said first cell, a correct positioning of the handy object, preferably of the key and/or of a key holder engaged with the key,
- in case of correct positioning, activating the recognition means.

In one aspect, the system comprises a control unit configured for:
- recognizing, by means of said recognition means, the delivered handy object, preferably the key,
- if the delivered handy object, preferably the key, corresponds with a handy object, preferably an expected key, terminating the procedure of delivery of the handy object, preferably of the key, of
- if the delivered handy object, preferably the key, does not correspond with a handy object, preferably an expected key, signaling an error in the procedure of delivery of the handy object, preferably of the key.

In one aspect, the control unit is connected to a database containing information on users enabled for renting a vehicle and on keys and vehicles suitable for being rented.

In a second aspect, a method is provided for renting vehicles by means of the system in accordance with any one of the preceding aspects and/or claims, comprising:
- authenticating a user,
- identifying a key which the user must pick up or deliver, in particular by means of the recognition means,
- moving the storage until a first cell of the storage is brought to the door,
- opening the door,
- picking up the key or placing the key on the bottom of the cell.

In one aspect, the opening of the door occurs automatically.

In one aspect, the opening of the door is driven by the control unit.

In one aspect, the recognition means are operating within said first cell.

In one aspect, the method comprises detecting if the key delivered by the user corresponds with an expected key.

In one aspect, moving the storage comprises rotating the storage.

In one aspect, the rotation of the storage occurs on a substantially horizontal plane.

In one aspect, the method also comprises the steps of:
- recognizing, in said first cell, a correct positioning of the key and/or of a key holder engaged with the key,
- in case of correct positioning, activating the means for recognizing the key in order to detect if the delivered key corresponds with an expected key.

In one aspect, the method also comprises the steps of:
- recognizing, by means of said recognition means, the delivered key,
- if the delivered key corresponds with an expected key, terminating the procedure of delivery of the key, or
- if the delivered key does not correspond with an expected key, signaling an error in the procedure of delivery of the key.

In one aspect, authenticating a user comprises interrogating a database containing information on users enabled for renting a vehicle and on keys and vehicles suitable for being rented.

In one aspect, the method is for renting motor vehicles, motorcycles, boats, aircraft.

### Description of the drawings

By way of a non-limiting example, the detailed description of one or more preferred embodiments of the invention is now reported, wherein:
figure 1 represents a front perspective view, with some elements removed, of one element of the system in accordance with the present invention;
figure 2 represents a front perspective view of the system in accordance with the present invention;
figure 3 represents a detail of one cell of the system of the preceding figures, with a key abutted against the bottom of the cell at the interior;
figure 4 represents a partial cross section of the cell of figure 3 illustrating the engagement between the key holder and the bottom of the cell;
figure 5 represents an alternative configuration of the cell with respect to that of the cell of figures 3 and 4.

### Detailed description

With reference to the figures, reference number 1 overall indicates a system for managing the pick-up and delivery of at least one handy object 2 which in the embodiment illustrated and described hereinbelow is a key 2 of a vehicle. The system 1 is used in the scope of vehicle rental services.

The system 1 comprises a box-like body 3 and a storage 4 housed within the box-like body 3 and provided with a plurality of cells 5. Each cell 5 is configured for housing a key 2.

The box-like body 3 is compact and is configured for being abutted against the ground or against a counter of adjustable height based on the requirements and place of installation of the system 1. If a counter is provided for, this is preferably anchored to the ground so as to make it impossible to steal the box-like body 3 and the storage 4 with the keys 2 contained therein and to make the tampering therewith difficult. With regard to size, the box-like body 3 has a depth P3 comprised between 50 and 70 cm, a length L3 comprised between 50 and 70 cm and a height H3 comprised between 40 and 50 cm. In a preferred embodiment, the depth P3 and the length L3 of the box-like body 3 are substantially equal to 62 cm (the box-like body 3 has square base) and the height H3 of the box-like body 3 is substantially equal to 45 cm.

The box-like body 3 has a panel 6 frontally positioned with respect to the storage 4. The storage 4 can be moved via rotation with respect to the box-like body and in particular with respect to the panel. In accordance with the embodiment shown in the enclosed figures, the rotation of the storage occurs on a substantially horizontal plane and around a main axis A.

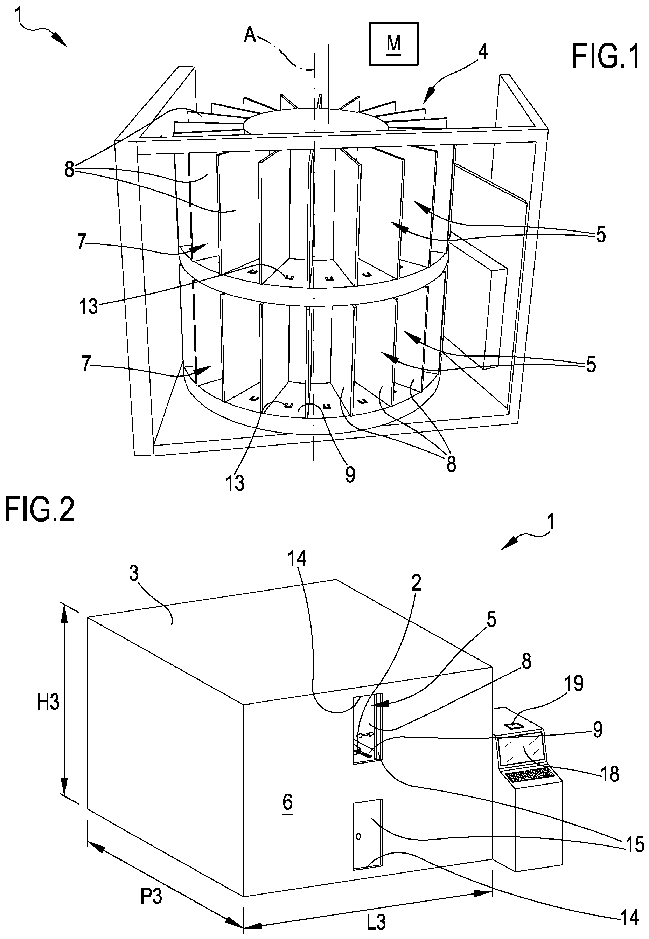

The storage 4 comprises one or more rotating elements 7 rotating around the main axis A; in figure 1, a storage 4 is illustrated provided with two rotating elements 7. The rotating elements 7 are stacked on each other, are arranged at different heights with respect to each other and rotate on horizontal planes that are parallel to each other.

The system 1 is provided with motor means M (schematically illustrated in figure 1) which manage the rotation of the storage 4. The motor means M are configured for allowing the rotation of a single rotating element 7 at a time or of a plurality of rotating elements 7 in an integral manner. The motor means M can for example comprise at least one electric motor.

Hereinbelow, the structure of a single rotating element 7 will be described, which can be the same for all the rotating elements provided by the system 1.

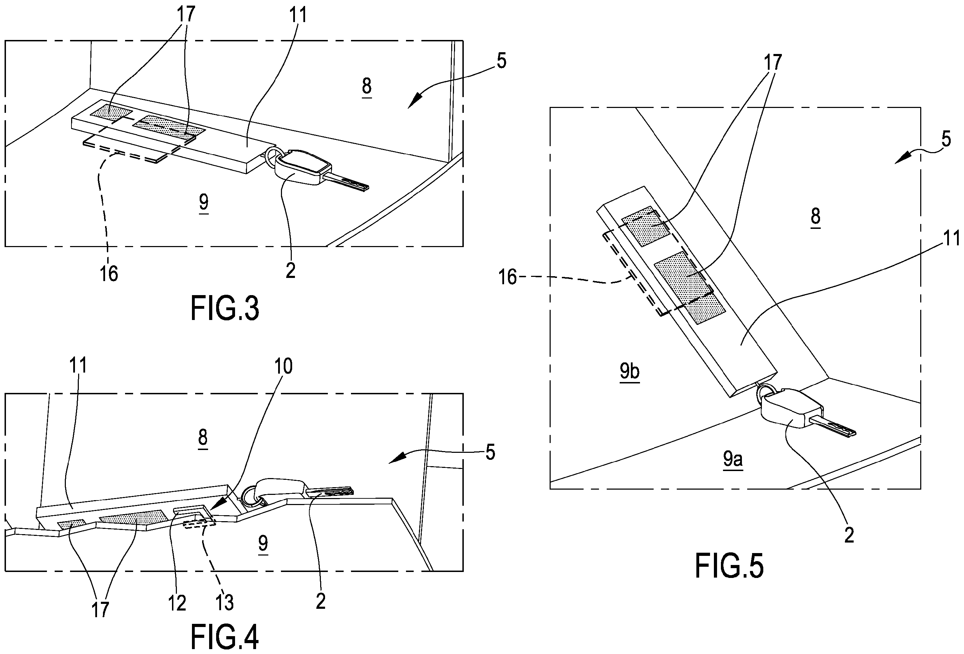

In the illustrated embodiment, each rotating element 7 has the shape of a wheel provided with a plurality of cells. The rotating element 7 has a plurality of radial walls 8, radial with respect to the main axis A. Pairs of adjacent walls 8 laterally delimit a respective cell 5, which has a width that decreases towards the main axis (the cell 5 has a substantially wedge-shaped conformation). Each cell 5 is delimited on the lower part by a bottom portion 9 and on the upper part by an upper portion that is opposite the bottom portion 9. The bottom portion 9 can be substantially flat (see figures 3 and 4) or it can have a first rectilinear section 9a and a second section 9b that is transverse with respect to the first rectilinear section 9a (see figure 5), so as to decrease the depth of the cells 5 and hence the bulk thereof and consequently increase the compactness of the storage 4.

The bottom portion 9 and the upper portion can for example have a discoid form.

The system 1 is also provided with a system 10 for coupling between a key holder 11 engaged with the key 2 and the bottom portion 9 of the cell 5. The coupling system 10 is configured for allowing a single position of the key holder 11 and/or of the key 2 inside the cell 5, so as to be ensured that the key holder 11 and the key 2 are in a specific position with respect to recognition means that will be described hereinbelow. The coupling system 10 comprises a male connector 12 obtained on the key holder 11 and a female seat 13, in particular counter-shaped with respect to the male connector 12, obtained on the bottom portion of the cell 9 and which allows the housing of the male connector 12 (see the cross section of figure 4) in a single position in order to ensure the correct mutual positioning between the key holder 11 and the bottom portion 9 of the cell 5.

Between the key holder 11 and the key 2, a constraining element is provided that is configured for maintaining a specific mutual position between the key holder 11 and the key 2. The constraining element can be of fixed type and can always maintain the mutual position between the key holder 11 and the key 2 fixed, or it can provide for a manual locking (and unlocking), which allows selecting a desired mutual position between the key holder 11 and the key 2 and locking the constraining element in such position. In said mutual position managed by the constraining element, the key holder 11 and the key 2 can define an angle comprised between 0 degrees and 90 degrees.

The panel 6 has one or more openings 14 and preferably a number of openings 14 equal to the number of rotating elements 7 of the storage 4, in a manner such that each opening 14 can serve a single rotating element 7. The opening 14 can be sized in order to provide a single cell 5 at a time for each rotating element 7. In figure 2, a storage 4 is for example represented provided with two rotating elements 7 and with two openings 14 obtained on the panel 6, each of which arranged at the height of a respective rotating element 7. The openings 14 are sized and shaped in order to allow the insertion of a user's hand inside the cell 5 in order to pick up or place a key 2 in the cell 5.

The panel 6 is provided with a door 15 which allows the access to a respective opening 14 and then to a cell 5 of the storage 4 for placing or picking up a key 2 at the cell 5. The door 15 can translate with respect to the opening 14 in order to allow the access to the cell 5 (open position of the door 15) or inhibit the access to the cell 5 (closed position of the door 15). As illustrated in figure 2, the door 15 can translate horizontally and in the closed position it can be housed within a space of the box-like body 3.

The movement of the door 15, both for its closure and for its opening, preferably automatically occurs and can be managed by a control unit 19.

The system 1 also has recognition means 16, 17. The recognition means 16, 17 are configured for recognizing the key 2 and/or reading information on the key 2 or the key holder 11. The information that is read serves for identifying the key 2 and/or the vehicle associated with the key 2, so that the user can rent or terminate the rental of the correct vehicle. The information can for example be related to the license plate of the vehicle associated with the key 2 or with other identification elements of the key 2 (e.g. the shape of the key 2) or of the vehicle (chassis number, data relative to the insurance, etc.).

The recognition means 16, 17 comprise a reader 16 and identification means 17, which cooperate with each other in order to allow the recognition of the key 2. The reader 16 is configured for recognizing and reading the information carried by the identification means 17.

The reader 16 is arranged in proximity to the opening 14 in a manner such to be operating inside the cell 5 which is brought, by means of the movement of the storage 4, to the opening 14. In such a manner, for each rotating element 7 a single reader 16 can be provided that is fixed with respect to the storage 4, and therefore it is not necessary for the system 1 to have as many readers 16 as there are cells 5, since it is sufficient to rotate the rotating element 7, bringing the cell 5 of interest to said reader 16.

The identification means 17 are associated with the key 2 or with the key holder 11 and the number thereof can be equal to that of the keys 2 arranged within the storage 4. The identification means 17 can be arranged at a lower surface of the key holder 11 (figure 4) and/or at an upper surface of the key holder 11 (figure 3 and figure 5).

In order to facilitate the reading by the reader 16, the coupling system 10 ensures the positioning of the identification means 17 at a fixed distance from the reader 16 and/or with a certain orientation in space with respect to the reader 16.

The reader 16 can be at least one from among: a RFID reader, a barcode reader, a QR code (Quick Response Code) reader device, a camera or an optical character recognition device (OCR).

In the embodiment in which the reader 16 is of RFID type, the means 17 for identifying the key 2 are constituted by a RFID tag. The RFID reader can be placed below the bottom portion 9 of the cell 5 or it can be embedded in the material of the bottom portion 9 itself (figure 3 and figure 5).

In the embodiment in which a barcode reader is provided, the identification means 17 are constituted by a barcode.

In the embodiment in which a QR code reader device is provided, the identification means 17 are constituted by a QR code.

In the embodiment in which an optical character recognition device (OCR) or a camera is provided, the identification means 17 are constituted by an alphanumeric code, which can for example reproduce the license plate of a vehicle. The camera can be positioned outside the cell 5 and be directed towards the bottom portion 9 of the cell 5 in a manner such to read the license plate of the vehicle and/or the shape of the key 2.

The above-described embodiments can of course be variously combined, for example a system 1 can be provided that has both a RFID reader and a camera and keys 2 or key holder 11 provided with RFID tag and with an alphanumeric code.

The system 1 is also provided with a device 18 for authenticating a user, which can for example be a computer (see figure 2) or a mobile device such as a tablet or a cell phone or a smartphone. The authentication device 18 allows the identification of the user and recognizes the possible authorization for the use of the system 1 for the purpose of renting a vehicle or returning the keys thereof. The system 1 can also provide for a database containing information on users enabled for renting a vehicle and on keys 2 and vehicles suitable for being rented. The logic of the system 1 is managed by a control unit 19, which is connected to the storage 4, to the door 15, to the recognition means 16, 17, to the authentication device 18 and to the database. The control unit 19 can for example be provided by a tablet or by a computer, which can be arranged next to the box-like body 3 or it can be integrated within the box-like body 3.

The functions of the various connections of the control unit 19 will now be briefly described, followed by the description of a method for renting a vehicle that makes use of the just-described system 1.

The connection of the control unit 19 to the storage 4 allows the rotation of the storage 4 in order to provide the suitable cell 5 at a door 15 of the panel 6.

The connection of the control unit 19 to the door 15 allows the opening and the closing of the door 15 even without a dedicated key. The opening and closing of the door 15 can in fact be carried out by means of electrical pulses that lock the door 15 in the closed position or unlock the door 15 from the closed position in order to allow the opening thereof. As safety measure, there may be the possibility that the door 15 can still be opened by means of a key available to the operators assigned for managing the system 1. The closing and the opening of the door 15 can be remotely managed by an assigned operator.

The control unit 19 is also connected to the recognition means 16, 17. Such connection allows activating the recognition means 16, 17 at the opportune moment of the rental procedure, hence preventing the recognition means 16, 17 from always being on, and therefore allowing energy savings.

With regard to the connection between the control unit 19 and the authentication device 18, it has the function of preventing unauthorized people from having access to the keys 2 of the vehicles to be rented.

The control unit 19 is also connected to the database in order to allow the management of the rental authorizations and for managing the vehicle fleet that can be rented.

The present invention also regards a method for renting vehicles that uses the above-described system 1.

The user who must rent a vehicle goes to the system 1 and starts the authentication procedure, for example by means of the authentication device 18.

Following the authentication of the user, the system 1 identifies the key 2 that the user must pick up or deliver. In the case of pick-up of the key 2, the method can provide for the selection, by the user, of the vehicle to be used from among a list of vehicles available for rent.

In the case of delivery of the key 2, the control unit 19 already knows the key 2 that the user must deliver (it is the key that he/she previously picked up in order to rent the vehicle), while in the case of pick-up of the key 2, the control unit 19 knows which is the key to provide to the user only after the selection of a vehicle by the user (or the user can be automatically assigned a vehicle).

In any case, after having recognized the correct key to be delivered or picked up, the storage 4 is moved in order to bring a cell 5 to the opening 14. Such cell 5 contains the key 2 to be picked up (key pick-up procedure) or it is the cell 5 designed by the control unit 19 for the return of the key 2 (key delivery procedure). At this point, the method provides for the automatic opening of the door, by means of which the user has access to the cell 5 in order to pick up or deliver the key 2.

In the case of pick-up of the key 2, the user picks up the key and the door 15 is automatically closed.

With regard to the procedure of delivery of the key 2, the user places the key 2 to be delivered on the bottom portion 9 of the cell 5, in a manner such to position it in the position provided by the coupling system 10. At this point the control unit 19 activates the reader 16, in order to allow the system 1 to detect if the delivered key 2 corresponds with the rented vehicle. The reader 16, by reading the information of the identification means 17 associated with the key 2 and/or by recognizing the shape of the key 2, is able to recognize if the delivered key 2 is the key expected by the system (the correct key) or if an incorrect key has been delivered. The recognition of the shape of the key 2 can provide for the positioning of the key 2 such that one head of the key forms an angle of about 90 degrees with respect to the bottom portion 9 of the cell 5. Such positioning can simplify the reading of the shape of the key 2 by a camera placed at or in proximity to an upper portion of the cell 5.

In case of lack of delivery of the key expected by the system, an error is signaled in the key 2 delivery procedure. At this point, an intervention of an operator can be provided for verifying if there has been an error in the positioning of the key 2 and hence the reader 16 was unable to identify the key 2 or if the delivered key actually was not the expected key. In addition, if the delivered key 2 is not the key expected by the system 1, the closure of the door 15 can be prevented and hence the rental procedure cannot be correctly terminated.

If however the delivered key is the expected key, the door 15 is automatically closed upon input of the control unit 19 and can be locked by the control unit 19 itself in order to prevent a further opening thereof.

Hereinbelow, a key 2 pick-up procedure is described, which represents one possible embodiment of the method in accordance with the invention.

The user who is about to rent a vehicle activates the communication with the operator, for example by means of a computer or a tablet or a screen arranged in proximity to the box-like body 3 (such as the authentication device 18 of figure 2). The operator is not in the same place where the system 1 is installed, but is remotely situated with respect to the system 1 itself and has the role of guiding the user in the vehicle rental procedure.

In order to begin to complete the formalities of user authentication and recognition, the operator asks the user to show the credit card, for example by means of a camera (webcam). This operation can serve for verifying that the user actually has a credit card (and not a debit card), which constitutes the mode of payment normally used and preferred for renting vehicles. Once the credit card is verified, upon request of the operator, the user positions a document thereof and his/her driving license in front of a scanner, in order to carry out a scanning of the same. Subsequently, the operator asks the user to fill out a form with his/her data and to proceed with the scanning of the form itself; this operation terminates the user authentication formalities.

On the basis of the received documents, the operator prepares the contract (for example by using a standard model to be filled out with the user data) and, after the user has inserted his/her credit card in a suitable slit of the panel, shows the contact to the user in order to have the latter sign the contract itself. The signature can be made electronically by means of dedicated means, such as a screen and an electronic pen configured for writing on a document in electronic format by means of pressing on the screen. During the vehicle rental procedure, it is provided that the user can select the vehicle to be rented, or that the vehicle is assigned to the user.

At this point the operator prints the contract, which can be picked up by the user at the system 1.

The storage 4 is then rotated in order to provide the key 2 of the vehicle to be rented at the opening 14 of the panel 6 and the door 15 is automatically opened (remotely opened upon input of the operator, not manually by the user) in order to allow the pick-up of the key 2 by the user (see figure 2).

### Advantages

The present invention allows obtaining one or more of the following advantages and resolving one or more of the problems encountered in the prior art. First of all, the finding allows simply and effectively managing the vehicle rental procedure.

The system and the method in accordance with the invention also allow an effective management of both the steps of delivery and pick-up of the key of a vehicle.

The system is able to recognize the delivered key and ensures that the rental procedure cannot be terminated if not by means of the return of the correct key.

In this manner, an operator's presence at the system is not required, such operator suitable for recovering and identifying the keys of the vehicles; rather, it is the system itself which, by means of the recognition means, identifies the delivered key and verifies the correctness thereof.

The structure of the storage is such to prevent and/or minimize the break-in attempts of the same storage and the theft of the keys and vehicles.

The invention is also easy to use, easy to actuate and simple and inexpensive to make.

## Claims

1. System (1) for managing the pick-up and delivery of at least one handy object, comprising:
- a storage (4) provided with a plurality of cells (5),
- a panel (6) frontally positioned with respect to the storage (4) and provided with a door (15) of access to at least one cell (5) of the storage (4), wherein the storage (4) can be moved with respect to the panel (6) in order to provide a first cell (5) of the storage (4) at said access door (15),
- means (16, 17) for recognizing the handy object (2) and/or reading information on said handy object (2),
- a device (18) for authenticating a user,
- a control unit (19) connected to the storage (4), to the door (15), to the recognition means (16, 17) and to the authentication device (18),
wherein the control unit (19) is configured for:
- allowing the authentication of a user,
- in case of positive outcome of the authentication, allowing the access to said first cell (5) in order to pick up or deliver a handy object (2);
wherein said recognition means (16, 17) are operating within said first cell (5) and are arranged in proximity to the access door (15).

2. System according to claim 1, wherein the storage (4) is configured for rotating around a main axis (A) and with respect to the panel (6), and in particular wherein the storage (4) is configured for rotating on a substantially horizontal plane.

3. System according to any one of the preceding claims, wherein the storage (4) comprises one or more rotating elements (7) rotating around a main axis (A) and coaxial with each other, each rotating element (7) comprising a plurality of walls (8) radially arranged with respect to the main axis (A), said walls (8) laterally delimiting respective cells (5), each rotating element (7) also comprising a bottom portion (9) and an upper portion opposite said bottom portion (9), the bottom portion (9) and the upper portion respectively delimiting the cells (5) at the lower and upper parts, the cells (5) being radially open towards the exterior of the rotating element (7).

4. System according to any one of the preceding claims, wherein the panel (6) is configured for allowing the access only to one cell (5) or to a limited number of cells (5), for example to one cell (5) for each rotating element (7), by means of a respective door (15) for each cell (5) of said limited number of cells.

5. System according to any one of the preceding claims, wherein the system (1) comprises a box-like body (3) configured for being abutted against the ground or against a counter, the box-like body (3) comprising said panel (6), the storage (4) being arranged inside the box-like body (3).

6. System according to any one of the preceding claims, wherein the system (1) also comprises a coupling system (10) for a correct positioning of the handy object (2) with respect to said recognition means (16, 17) and wherein the coupling system (10) is configured for allowing a single position of the handy object (2) within said first cell.

7. System according to the preceding claim, wherein the system (1) comprises at least handy object (2), the handy object (2) being provided with said coupling system (10).

8. System according to any one of the preceding claims, wherein the recognition means (16, 17) dialog with the handy object (2) in order to identify the specific object arranged in said first cell (5) and/or wherein the means (16, 17) for recognizing the object (2) are configured for recognizing the shape of the object (2) delivered in said first cell (5).

9. System according to any one of the preceding claims, wherein the recognition means (16, 17) comprise at least one reader (16) and means (17) for identifying the handy object (2), the reader (16) being at least one from among: a RFID reader, a barcode reader, a QR code reader device, a camera or an optical character recognition device (OCR), the means (11) for identifying the object (2) comprising at least one from among: a RFID tag, a barcode, a QR code, an alphanumeric code.

10. System according to any one of the preceding claims, wherein said handy object (2) is a key, preferably of a vehicle, or a key holder.

11. System according to the preceding claim, wherein the identification means (11) of the key (2) comprising at least one from among: a RFID tag, a barcode, a QR code, an alphanumeric code, for example associated with a license plate of a vehicle; and wherein the identification means (17) are engaged with the key (2) and/or with a key holder (11).

12. System according to any one of the preceding claims, wherein the recognition means (16, 17) comprise at least one reader (16).

13. System according to the preceding claim, wherein the reader (16) is fixed with respect to the storage (4) and with respect to the box-like body (3); wherein the reader (16) is arranged in proximity to an opening (14) closed by the door (15), in a manner such to be operating inside the cell (5) which is brought, by means of the movement of the storage (4), to the opening (14).

14. System according to claim 12 or 13, wherein the reader (16) is arranged below a bottom portion (9) of the cell (5) or it is embedded in the material of the bottom portion (9).

15. Method for renting vehicles by means of the system (1) in accordance with any one of the preceding claims, comprising:
- authenticating a user,
- identifying a key (2) that the user must pick up or deliver, in particular by means of the recognition means (16, 17),
- moving the storage (4) until a first cell (5) of the storage (4) is brought to the door (15),
- opening the door (15),
- picking up the key (2) or putting the key (2) on a bottom portion (9) of the cell (5).
